# EUROPEAN PATENT APPLICATION

(11) **EP 1 953 670 A2**
(43) Date of publication of application: **06.08.2008**
(21) Application number: 08250322.8
(22) Date of filing: 25.01.2008
(51) Int. Cl.: G06F 21/02

(54) **System and method of storage device data encryption and data access**

(30) Priority: 30.01.2007 US 668892
(71) Applicant: Technology Properties Limited, Cupertino, CA 95014 (US)
(72) Inventor: Iyer, Sree M, San Jose CA 95135 (US); Antonopoulos, Nicholas, San Jose CA 95118 (US)
(74) Representative: Beresford, Keith Denis Lewis

(57) **Abstract**

Systems and methods of storage device data encryption and data access are described herein. Some embodiments of the present invention are summarized in this section. One embodiment includes receiving a request to access data stored on a storage device, wherein the data stored on the storage device has been encrypted using at least one encryption key. In response to receiving the request, prompting a user to provide a password, and in response to receiving a password matching a predetermined password, accessing the encryption key to decipher the requested data stored on the storage device.

## Description

### TECHNICAL FIELD

The present disclosure relates generally to a method and system of storage device data encryption and data access.

### BACKGROUND

With an increased reliability on portable electronic devices to conduct personal and business tasks, documents and media traditionally carried in physical form are becoming digitized for access and transmission via electronic means. Portable electronic devices (e.g., flash memory devices, laptop, notebook, PDA, mobile phone, and/or BlackBerry, etc.) are typically equipped with multi-media and document access software to facilitate task management with portable electronic devices.

As such, storage devices of the portable electronic devices may store large amounts of files and documents such as photography, video files, audio files, financial documents, receipts, medical records, insurance information, business related documents such as business plans, financial balance sheets, legal documents, etc. Additionally, temporary internet files and cookies may store user information such as passwords to websites that can be used to gain access to confidential information such as financial documents and/or medical records.

With increased usage of portable electronic devices, security of data stored on storage devices has become imperative as personal privacy and confidentiality can be jeopardized upon unauthorized access of electronic devices. While passwords (e.g., operating system log on password, BIOS password, etc.) have prevented unauthorized users from logging on to a host device (e.g., a laptop computer), the contents of the storage device can be compromised upon removal of the device from the host system. For example, a data hacker may physically remove the storage device and move it to another host device to which the data hacker has authorization for access.

Thus, there is a need for a security technique that encrypts data stored on the storage devices to be used to protect data on the storage device even if the operating system on a host system is not active, for example, if the data is read directly from the storage device such that in order for the host system to access data from the storage device, the request to access is authorized prior to decryption of the data on the storage device to be accessed.

### SUMMARY OF THE DESCRIPTION

Systems and methods of storage device data encryption and data access are described here. Some embodiments of the present invention are summarized in this section.

One embodiment includes receiving a request to access data stored on a storage device, wherein the data stored on the storage device has been encrypted using at least one encryption key. In response to receiving the request, prompting a user to provide a password, and in response to receiving a password matching a predetermined password, accessing the encryption key to decipher the requested data stored on the storage device. In one embodiment, the receiving the request comprises receiving a first request of a session, wherein the session is initiated in response to at least one of a power-up, completion of a time-out, and a restart of the system. Further more, in one embodiment, in response to receiving a password that does not match a predetermined password, sending an IP address associated with the system to a pre-identified recipient to identify a location of the storage device.

The present disclosure includes methods and apparatuses which perform these methods, including processing systems which perform these methods, and computer readable media which when executed on processing systems cause the systems to perform these methods.

Other features of the present invention will be apparent from the accompanying drawings and from the detailed description which follows.

### BRIEF DESCRIPTION OF THE DRAWINGS

The disclosure is illustrated by way of example and not limitation in the figures of the accompanying drawings in which like references indicate similar elements.

**FIGURE 1** illustrates an example of a storage device that communicates with a host system through an interceptor module, according to one embodiment.

**FIGURE 2** illustrates an exemplary exploded view of a host system that communicates with a storage device via an interceptor module, according to one embodiment.

**FIGURE 3A** is a flow chart illustrating a process to set up a password for storage device data encryption and data access, according to one embodiment.

**FIGURE 3B** is a flow chart illustrating a process to authorize storage device data encryption and data access, according to one embodiment.

**FIGURE 3C** is a flow chart illustrating a process to identify a lost or stolen portable device, according to one embodiment.

**FIGURE 4A** is an interaction diagram describing an example of the process shown in **FIGURE 3B** illustrating interactions between a storage device, an interceptor module, and a host system for password authorization to storage device data encryption and data access, according to one embodiment.

**FIGURE 4B** is an interaction diagram further describing an example of the process shown in **FIGURE 3B** illustrating interactions between a storage device, an interceptor module, and a host system for storage device data access, according to one embodiment.

**FIGURE 5** illustrates a screen shot showing an interface to create a password or to change the password, according to one embodiment.

**FIGURE 6** illustrates a screenshot showing an interface to secure a storage device, according to one embodiment.

**FIGURE 7A** illustrates a screenshot showing an interface showing a login screen to access a secured storage device, according to one embodiment

**FIGURE 7B** illustrates a screenshot showing an interface showing a login screen having a password prompt, according to one embodiment.

**FIGURE 7C** illustrates a screenshot of a unsuccessful logon due to an invalid password entered in **FIGURE 7B****,** according to one embodiment.

**FIGURE 8** illustrates a screenshot showing an interface showing a screen to display a password hint, according to one embodiment.

**FIGURE 9** is an exploded view of a interceptor module having a processing unit, a memory module, a controller, a software module, and/or a wireless module, according to one embodiment.

**FIGURE 10** illustrates a block diagram having sources for a set of instructions, according to one embodiment.

### DETAILED DESCRIPTION

The following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be, but not necessarily are, references to the same embodiment; and, such references mean at least one.

Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Embodiments of the present disclosure include methods and systems of storage device data encryption and data access.

Data encryption of a storage device via hardware modules provide a secure way to ensure privacy and confidentiality through encryption of data on a storage device. Existing data on a storage device such as a disk drive can be secured through an encryption procedure of data stored on the disk drive. When a command to secure a storage device is received, a password setup process is initiated, according to one embodiment.

The initial setup process enables the user to set up one or more passwords to access (e.g., encrypt, decipher, delete, backup, etc.) data on the storage device. Different access levels (e.g., privilege to read/write/erase) can be set for different users of the system, according to one embodiment. For example, the system administrator may be authorized to encrypt data and to decipher data from the storage device. The system administrator may also possess privilege to initiate re-encryption with a different encryption key. An authorized user may possess privilege to read (or decipher) data from an encrypted drive.

Once the initial setup process has been completed and the predetermined password has been supplied, new data to be written to a storage device can be encrypted prior to storage on the storage device, according to one embodiment. In addition, if the user wishes to encrypt a used disk drive, the data already stored on the disk drive may be moved to a second storage location (e.g., another storage location on the same disk drive, another storage device, system memory, memory device, etc.) to be encrypted and then migrated back to the original storage location.

According to one embodiment, access to encrypted data on a secured storage device is obtained via supplying a password that matches a predetermined password. Through supplying the predetermined password, the encryption key used to encrypt data on the secured storage device can be accessed to decipher the encrypted data. In one embodiment, the encryption key or a masked version of the encryption key is stored on one or more of the storage devices on the host system at a predetermined location on the storage device. The predetermined location of the storage device is accessible during boot up prior to log on to the operating system such that the stored encryption keys can be accessed.

In one embodiment, a method includes receiving a request to access data stored on a storage device, wherein the data stored on the storage device has been encrypted using at least one encryption key. The request to access a storage device may be generated by a user during system boot up to log on to a host operating system that is installed on the storage device. The request may also be generated by a user to run a second operating system installed on a secondary partition of the storage device. Attempts to access specific files or folders can also trigger a request to be generated for access to encrypted data stored on a storage device. In addition, a request may be automatically or manually generated when the system or operating system exits sleep mode, power save mode, or time out. In general, the request will be automatically generated during system boot up or system restart.

In one embodiment, each file on the host system has a different encryption key. In some embodiments, each folder has a different encryption key. In another embodiment, all data residing on the storage device is encrypted with one encryption key. A combination of file specific encryption keys, folder specific encryption keys, and/or partition specific encryption keys can be implemented on the storage device or on multiple storage devices of a host system. Allocation of encryption keys to files, folders, partitions, and/or storage devices can be automatic or user specified.

In addition, the encryption key used for data encryption may be changed upon user request or upon an automatic trigger. Before applying a different encryption key, the encrypted data may be decrypted with the original key before encrypting the same data again with the different encryption key. For example, the automatic trigger may be event based such as several failed logon attempts followed by a successful attempt. The automatic trigger may also be time based, such as when an encryption key has been used for a predetermined amount of time.

In one embodiment, the method includes prompting a user to provide a password in response to receiving the request and accessing the encryption key to decipher the requested data stored on the storage device in response to receiving a password matching a predetermined password.

For example, when a host system exits sleep mode, the user can be prompted to supply a correct password before further using the host system. The user supplied password is compared to a predetermined password that is accessible prior to system logon. In one embodiment, the predetermined password is stored at a predetermined location on the storage device to be accessed. For example, the predetermined password can be stored in the master boot record of a bootable storage device. In one embodiment, the predetermined password for one storage device may be stored on another storage device. For example, in a system with multiple storage devices, the predetermined passwords for the slave storage devices may be stored on a master storage device.

The correct password allows access to one or several encryption keys used to encrypt data on the storage device, according to one embodiment. Alternatively, a password facilitates system boot up into the operating system while additional passwords enable access to different partitions, files, or folders once the user is logged in to the system. In one embodiment, a correct password is associated with the encryption key to decipher the requested data.

Alternatively, the correct password is associated with a masked version (e.g., an encrypted version) of the encryption key and the correct password may be used to un-mask the masked version of the encryption key. In one embodiment, the correct password is used to identify an additional key for unmasking the masked version of the encryption key. In addition, the encryption key is transferred from device to device in masked (e.g., encrypted, masked, private/public key rolling exchange, etc.) form to prevent confidentiality of the encryption key from being compromised in case the transfer is intercepted.

The requested data stored on the storage device can be encrypted with any suitable encryption algorithm. For example, encryption algorithms that can be used include but not limited to: RSA, Data Encryption Standard (DES/3DES), Blowfish, International Data Encryption Algorithm (IDEA), Software-optimized Encryption Algorithm (SEAL), RC4, Advanced Encryption Standard (AES), etc.

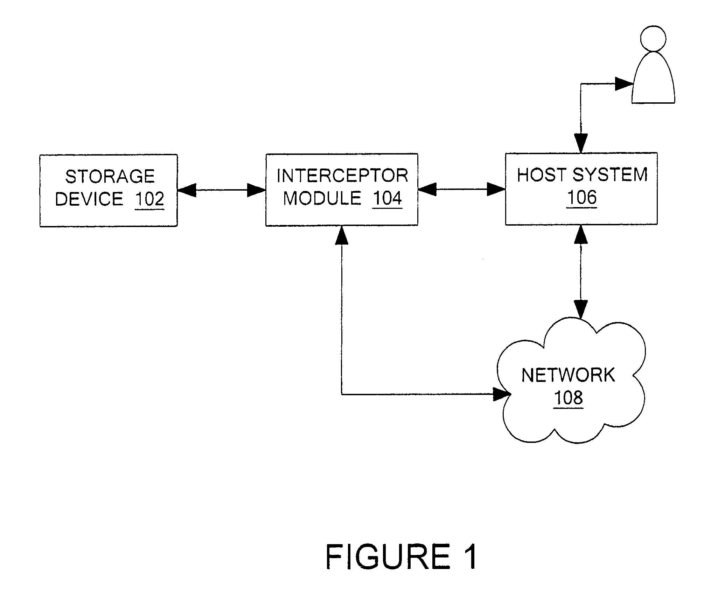

FIGURE 1 illustrates an example of a storage device 102 that communicates with a host system 106 through an interceptor device, also referred to herein as a module, 104, according to one embodiment.

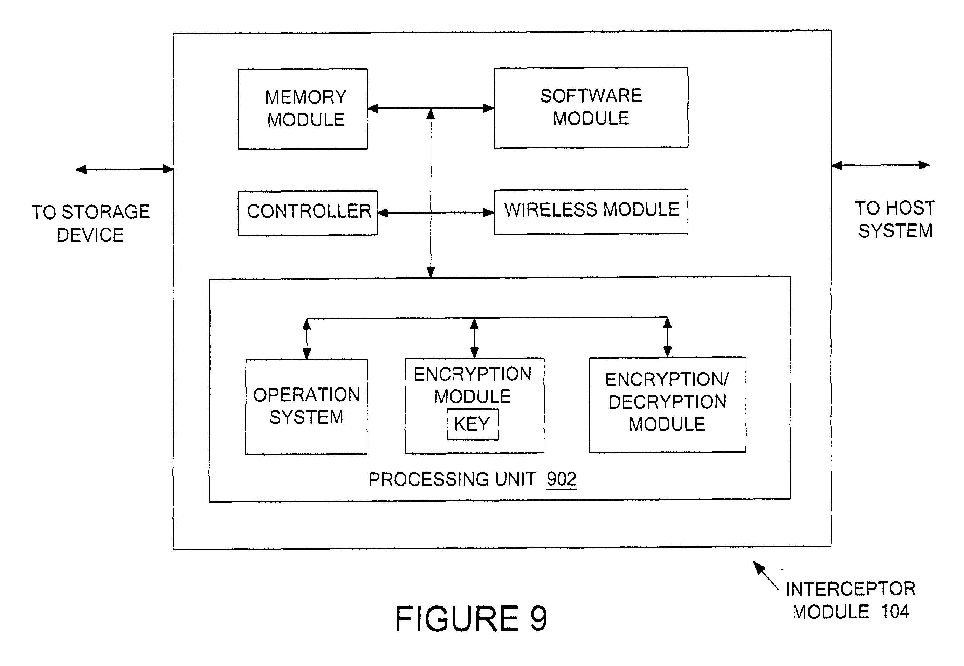

The storage device 102 is at least one of a hard disk drive, a hard disk drive with a parallel port (PATA), a hard disk drive with a serial port (SATA), a SCSI drive, an optical drive, a magnetic drive, an external storage device, semiconductor storage such as a flash device, or a magnetic-optical storage device that is peripheral to the host system 106. The interceptor module 104 is described with reference to Figure 9 and may include a controller, a memory, a processing unit and a software module for encryption purposes. The interceptor module 104 is coupled between the storage device 102 to the host system 106, in accordance with one embodiment.

The host system 106 can be any type of system that supports a storage device 102. For example, the host system can include but is not limited to, a desktop computer, a notebook, a laptop computer, a handheld computer, a mobile phone, a smart phone, a PDA, etc. In one embodiment, the host system 106 and/or the interceptor module 104 can be coupled to a network 108.

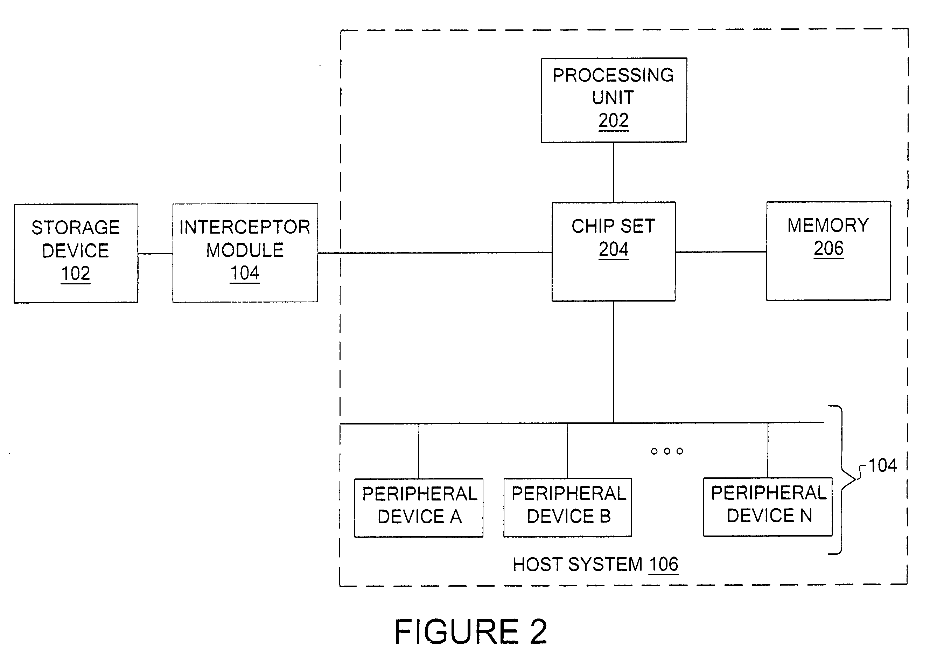

**FIGURE 2** illustrates an exemplary schematic view of a host system 106 that communicates with a storage device 102 via an interceptor module 104, according to one embodiment.

In one embodiment, the host system 106 includes a processing unit 202, a chip set 204, memory 206, and an array of I/O devices, which may include a keyboard, a pointing device, a sound system, and/or a video system, etc. The host system 106 illustrated is an exemplary overview thus there may be many variations and modifications of this system without departing from the spirit of the current disclosure. For example, the memory could be located on what is known in the art as the "north" bridge; the video system could have its own separate north bridge access, and the I/O could be connected through the "south" bridge.

In one embodiment, the interceptor module 104 is coupled to the host system 106 via the chipset 204. The interceptor module 104 and the storage device 106 can be coupled via one of an interface such as a serial ATA (SATA), parallel ATA (PATA) interface, FireWire, SCSI, or USB. The interceptor module 104 interface with the storage device 104 supports different data transfer rates depending on the specification of different storage devices. For example the SATA interface supports a data rate of 1.5, 3, and 6 Gbits/s. The FireWire 800 and FireWire 400 buses also have different data transfer rates.

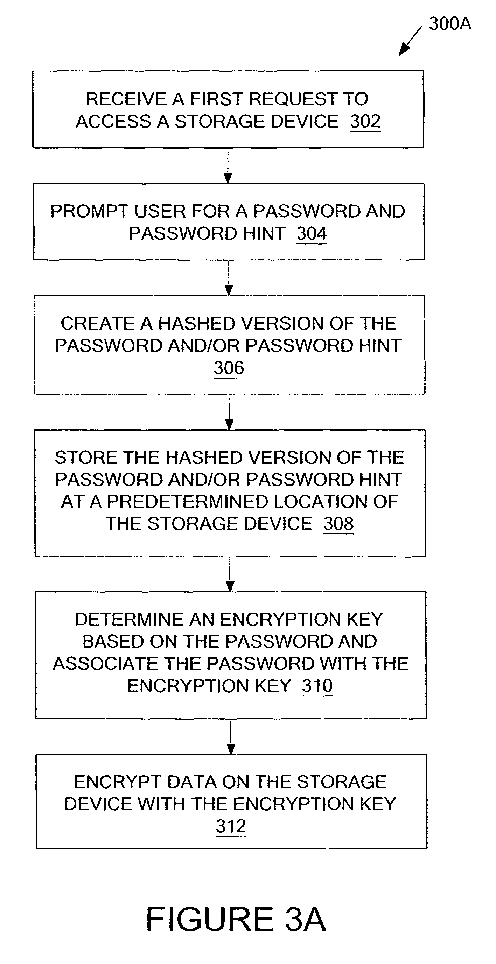

**FIGURE 3A** is a flow chart 300A illustrating a process to set up a password for storage device data encryption and data access, according to one embodiment.

In process 302, a first request to access a storage device is received. For example, when a user attempts to log on to a newly purchased laptop (e.g., host system), the user generates a first request to access the storage device of the newly purchased laptop. In addition, when a user attempts to use a newly installed unused storage device, the first request to access the storage device is generated by the user. In one embodiment, a first request to access the used storage device is also generated when the user attempts to secure existing data on a storage device having stored data on installed in a system with storage device data encryption capabilities.

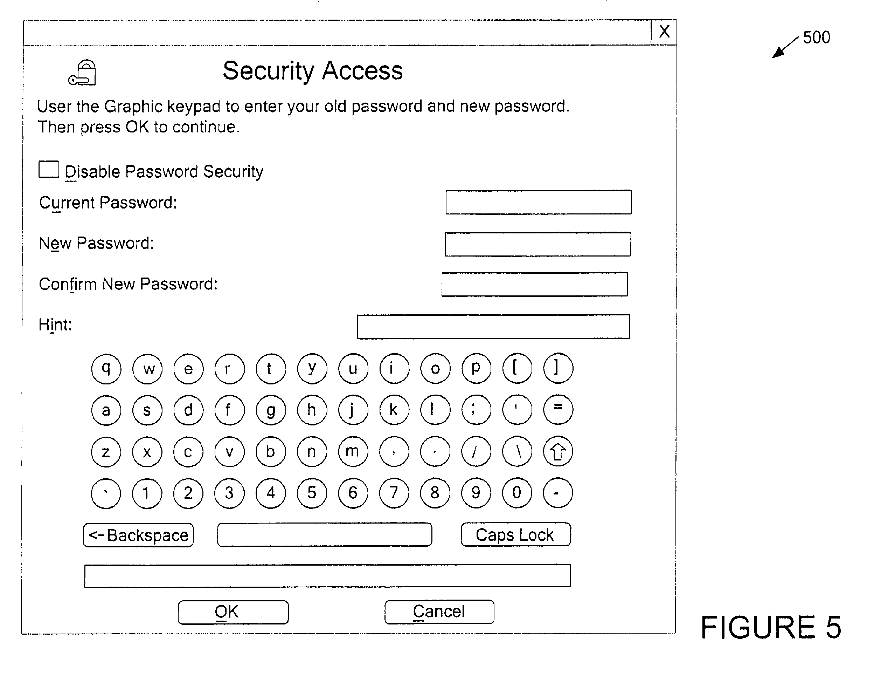

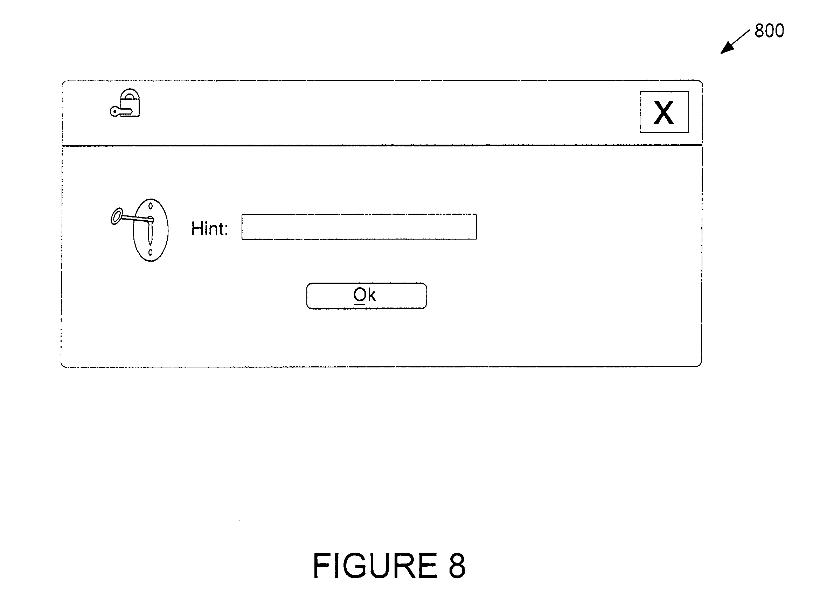

In process 304, the user is prompted to set up one or more passwords and a password hint as shown in the screenshot of **FIGURE 5****.** In one embodiment, the one or more passwords are used to generate one or more encryption keys to encrypt data on one or more storage devices of a host system. In one embodiment, the encryption key is predetermined and associated with the one or more passwords once they have been set up by the user in response to the request. In addition, the predetermined encryption key may be further masked (e.g., encrypted, or hashed) based on the one or more passwords set by the user. According to one embodiment, the password hint is supplied to the user upon failed logon attempts with wrong passwords as shown in the example screenshot of **FIGURE 8**.

In process 306, a hashed version of the password and the password hint is created. The hashed (or masked otherwise) version of the password and the password hint can be created to protect the password and the password hint. For example, if data is directly read from the storage device, the password will appear in a disguised form. Various hashing algorithms can be used. According to one embodiment, an encryption algorithm can be used to mask the password,

In process 308, the hashed (or disguised via any algorithm) version of the password and/or password hint are stored at a predetermined location of the storage device. In accordance with one embodiment, hashed version of the passwords and/or hints are stored on sectors of the storage device that are inaccessible to the operating system of the host. Thus, access of encrypted data cannot be by passed by the operating system without first supplying the correct password(s). In one embodiment, the hashed version of the password and/or password hint is stored on another storage device in the same host system. For example, the passwords to slave devices may be stored on the master device.

In process 310, an encryption key to encrypt data stored on the storage device is determined based on the password and the encryption key is associated with the password for future access. In one embodiment, the encryption key is generated from the password. In one embodiment, the encryption key is predetermined and can be further disguised (e.g., hashed or encrypted) based on an operation with the password thus creating an additional layer of security. For example, if the password is compromised, since the specific algorithm is unknown to a hacker, the encryption key remains protected.

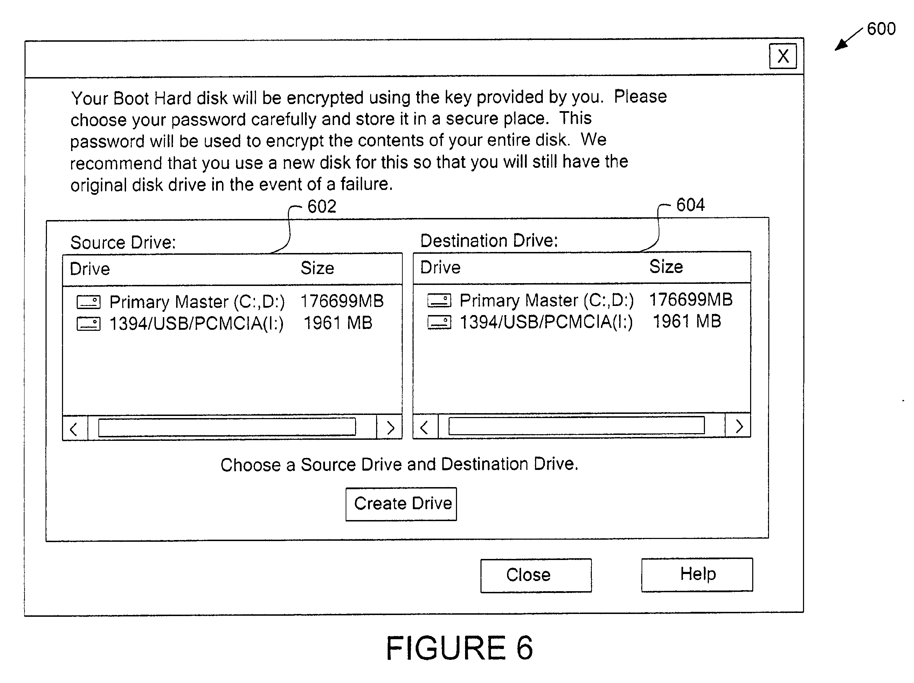

In operation 312, the data on the storage device is encrypted with the encryption key. For example, as shown in an example screenshot of **FIGURE 6**, a source drive to be secured can be selected under the list of 'Source Drive:" shown in window 602. In one embodiment, a `Destination Drive' (e.g., from the 'Destination Drive' window 604 of **FIGURE 6**) may be chosen to which to migrate the data from the 'Source Drive'. The data can be migrated from the source drive and encrypted at the destination drive. The encrypted data can be migrated back to the source drive or stored on the destination drive. In one embodiment, a destination drive does not need to be chosen. For example, the data to be encrypted on the source drive is migrated to a second storage location on the source drive to be encrypted. Similarly, the encrypted data is either migrated back to the original storage location or stored at the second storage location on the source drive.

In one embodiment, if the host system generates a request to write data to the storage device, the data is encrypted with the encryption key prior to migration to the storage device. In addition, the data may be written to the storage device prior to encryption and then encrypted at a later time based on automatic triggers or manual triggers. For example, data written in a predetermined time interval is encrypted. Similarly, a predetermined amount of data written (e.g., 5kB) can be encrypted at the same time.

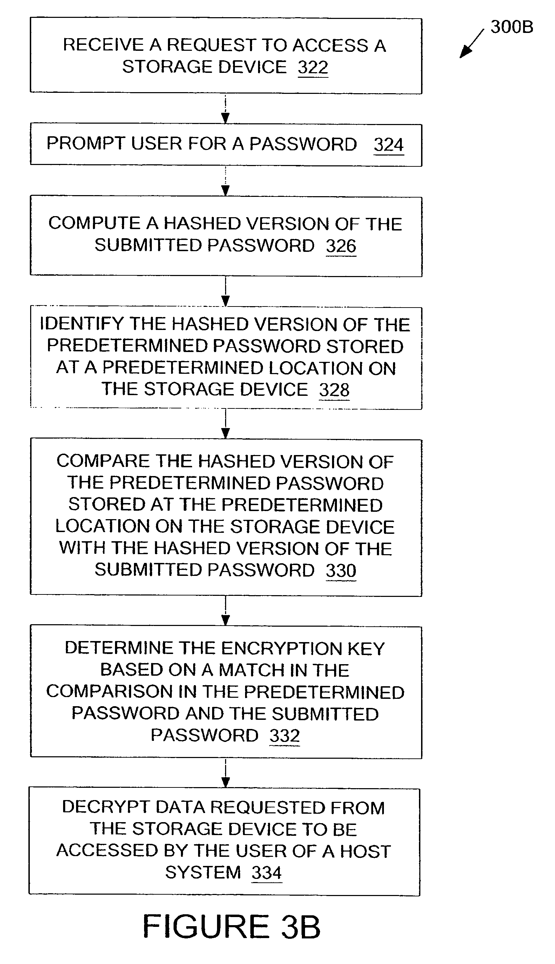

**FIGURE 3B** is a flow chart 300B illustrating a process to authorize storage device data encryption and data access, according to one embodiment.

In process 322, a request to access a storage device is received. For example, the request can be received upon initiation of a session. The session may be initiated in response to at least one of a power-up, completion of a time-out, or a restart of a system. The session may also be triggered after existing sleep mode or power save mode. In one embodiment, the request is generated when particular partitions, folders, or files of the storage device are accessed. Furthermore, a request can also be generated when a different operating system residing on a different partition of the storage device is accessed.

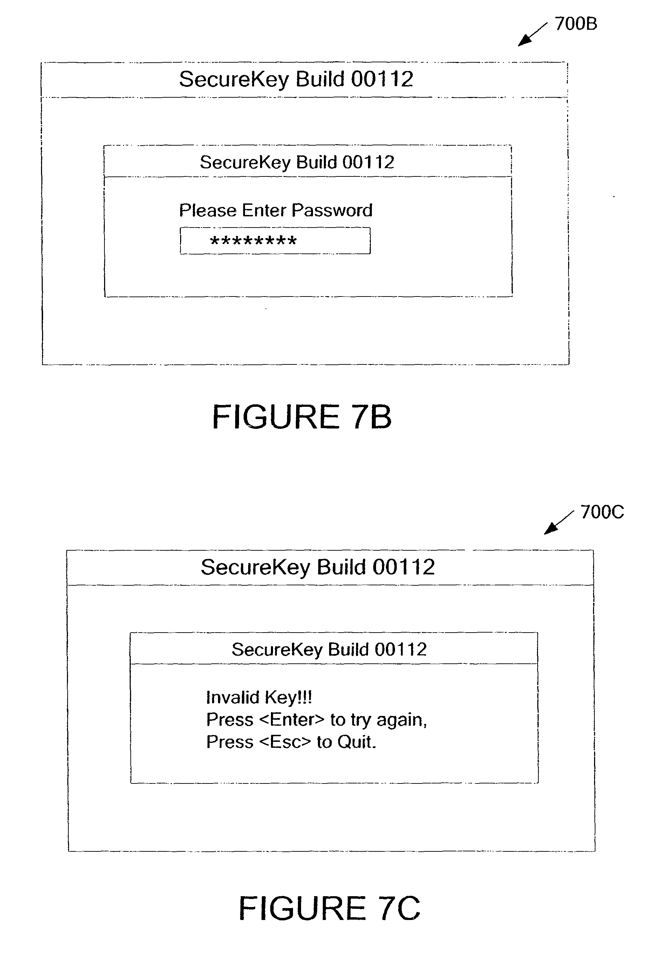

In process 324, the user is prompted for a password as shown in the example screenshot of **FIGURE 7B**. The password is used to authorize access to data on the storage device. For example, the password can be used to identify the encryption key used to encrypt data on the storage device through a look up table. In addition, as discussed previously, the password can be used to un-mask the encryption key itself. Multiple passwords may be used for different files, folders, operating systems, or partitions on one storage device, according to one embodiment.

In process 326, a hashed version of a user submitted password is computed based on a predetermined algorithm. According to one embodiment, an encryption algorithm can be used. In process 328, the hashed version of the predetermined password stored at a predetermined location on the storage device is identified. In process 330, the hashed version of the predetermined password is compared with the hashed version of the user submitted password. If a match is determined, access to the encryption key is enabled, in process 332. In process 334, the data requested from the storage device to be accessed by the user of the host system is decrypted.

In one embodiment, the encryption key is accessed from one of the interceptor module, the host system, and/or the storage device. For example, the encryption key is to be stored on a hidden location(s) or track(s) when accessed from the storage device. In one embodiment, accessing the encryption key comprises accessing an second encryption key to decipher the encryption key. For example, the encryption key may be stored in a disguised (e.g., masked, encrypted) form and is to be deciphered when a correct passcode (password) is supplied with the request to access.

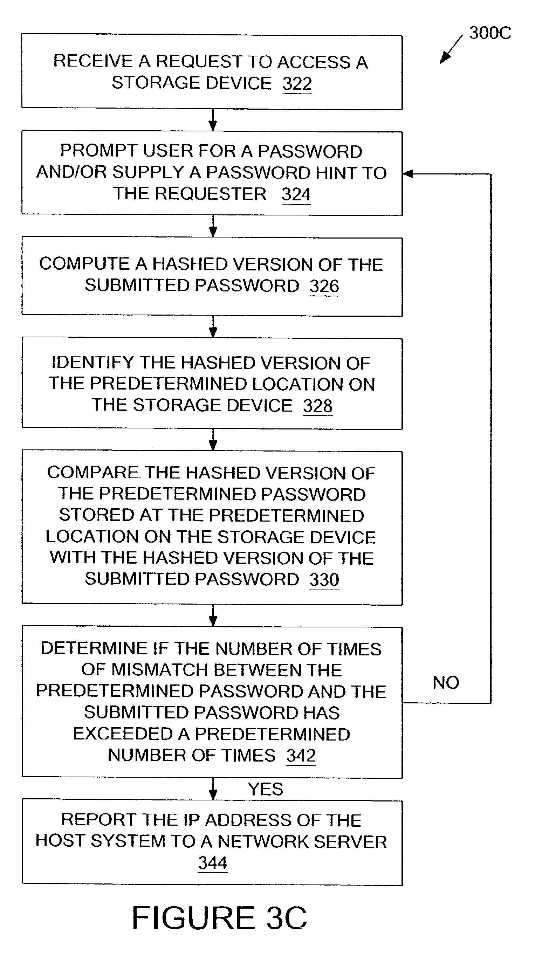

**FIGURE 3C** is a flow chart 300C illustrating a process to identify a lost or stolen portable device, according to one embodiment.

In process 330, the hashed version of the predetermined password is compared with the hashed version of the user submitted password. If a mismatch is identified, the number of time of mismatch that has occurred between the predetermined password and the submitted password is determined. If the number of times has not exceeded a predetermined threshold, the user is prompted again for a password and/or a password hint, in operation 342. For example, as shown in the example screenshot 700C of **FIGURE 7C**, an invalid key has been entered and the user has the option to retry or to quit.

If the number of times has exceeded the predetermined threshold, an IP address of the host system is reported to a network server if the system is connected to a network, in process 344. In one embodiment, a unique identifier of the host system such as a MAC address, a user name, a workgroup name, may be also broadcasted and associated with the IP address. The host system identifier and IP addresses can be published on a web site for individuals that have lost their electronic devices to see if any attempt has been made to access their devices. If so, the published IP address may clue them in as to the whereabouts of their lost devices.

In one embodiment, if the host system is not connected to a network at the time of the failed log on attempts, an indicator of the failed attempts can be saved and broadcasted the next time the system is connected to a network. In addition to reporting an IP address to a website, a notification can be sent to an email address as specified by the user in case of failed log on attempts. The email can report information such as the number of failed log on attempts, the passwords used to attempt log on, status of the system, IP address of the system if currently available, etc. In one embodiment, email notifications can be sent when any request to access fails. For example, if a failed attempt to access a particular file, or folder occurs, an email can be sent to an email address specified by the user.

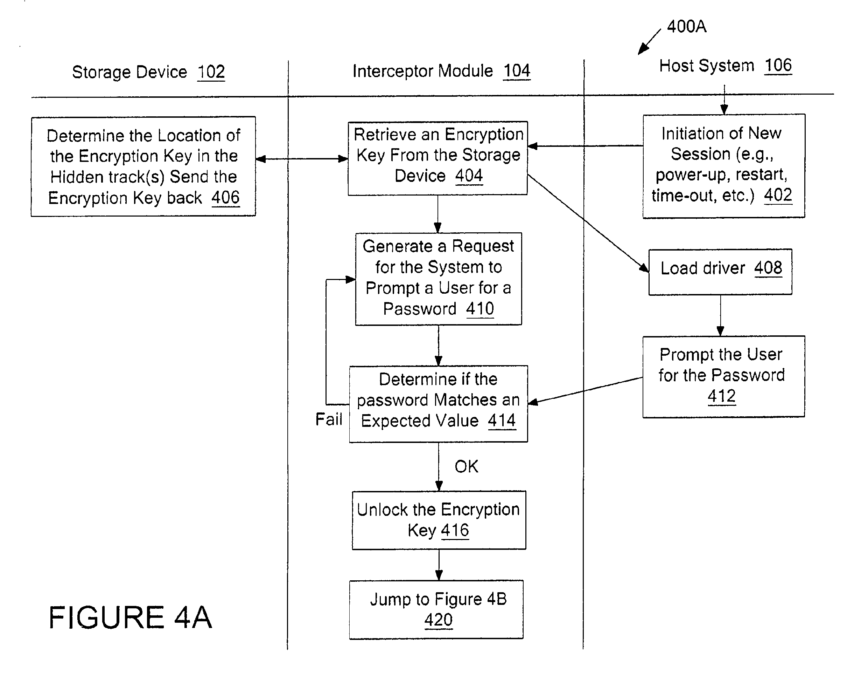

**FIGURE 4A** is an interaction diagram 400A describing an example of the process shown in **FIGURE 3B** illustrating interactions between a storage device, an interceptor module, and a host system for password authorization to storage device data encryption and data access, according to one embodiment.

In process 402, a user initiates first access of a session and the host system sends a request to interceptor module. The interceptor module identifies the request as the first request of this session. A session may be required to begin after a power-up, a time-out, restart, or some other trigger for terminating a previous session, according to one embodiment. In process 404, the interceptor module retrieves an encrypted version of the key from the hidden location(s) track(s) of the storage device. In process 406, the location of the key in the hidden tracks is determined, and the located encryption key is sent to the interceptor module.

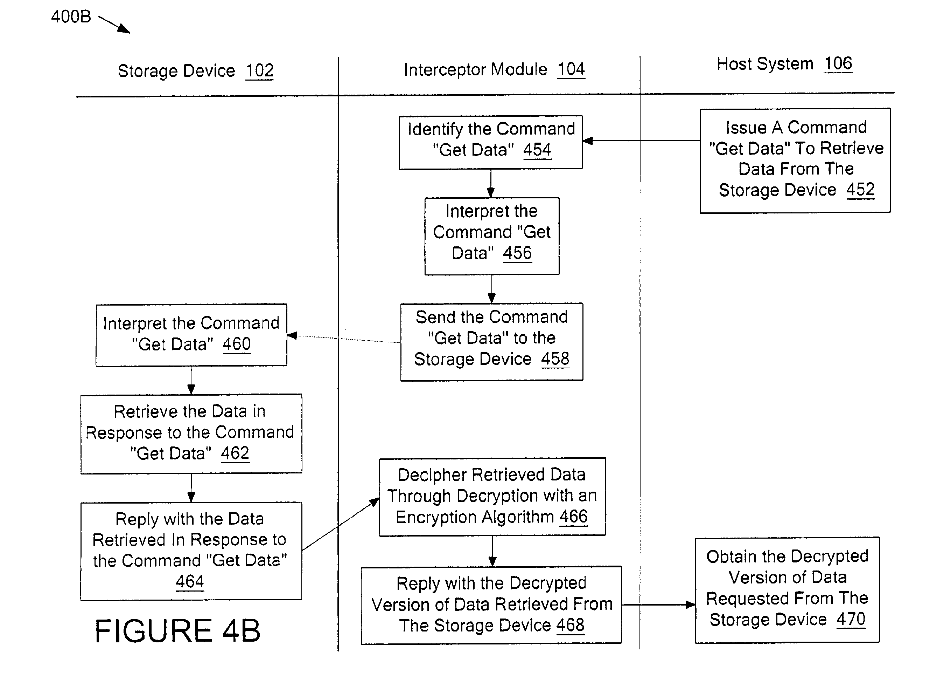

In process 408, a driver load is initiated on the host system, using, for example, USB plug-and-play features. In process 410, the interceptor module generates a request for the host system to prompt the user for a password. In process 412, the user is prompted for the password. After the user enters the password, in process 414, the system determines whether or not the password matches an expected value. The encryption key retrieved from the hidden tracks of the storage device in process 406 may also be encrypted using an encryption algorithm (e.g., DES/3DES, BlowFish, AES or other suitable encryption methods) or other methods to disguise the encryption key. If the password matches, the system unlocks the key, which then is used to decipher or encrypt the data, using an encryption algorithm such as AES or other, suitable protocols. In process 420, the process jumps to the process of Figure 4B.

In one embodiment, if the password does not match, the process loops back to process 410, prompting the user for the password again. After a predetermined number of failed attempts to match the password, the host system may terminate the session (e.g., by a time-out or a system reboot). In one embodiment, a hint or hint question is offered to the user to help with remembering the password or to allow an unlock override. In one embodiment, a master encryption key is available and is accessed with a master password to access an encrypted drive.

**FIGURE 4B** is an interaction diagram 400B further describing an example of the process shown in **FIGURE 3B** illustrating interactions between a storage device, an interceptor module, and a host system for storage device data access, according to one embodiment.

In process 452, the host system issues a command "Get Data". In process 454, the "Get Data" command is received and identified by the interceptor. In process 456, the command "Get Data" is interpreted by the interceptor module. In process 458, the command "Get Data" is sent to the storage device.

In process 460, the storage device receives and interprets the command. In process 462, the requested data is retrieved in response to the command "Get Data". In process 464, it sends a reply having the requested data back to the host.

In process 466, the retrieved data is deciphered through decryption with a suitable algorithm (e.g., encryption algorithm such as DES/3DES, Blowfish, AES, etc.). Depending on the algorithm used, an encryption key may be required to decipher the retrieved data (e.g. the key previously retrieved as described above).

In some cases, the key may be transmitted from the host computer by sending simulated commands (not shown) that include parameters uninterpretable by a hard disk drive, but are intercepted by the interceptor and interpreted accordingly, as, for example, a command for reception of the key.

In process 468, the decrypted version of the requested data retrieved from the storage device is sent to the host system. In process 470, the decrypted version of the requested data from the storage device is obtained. In one embodiment, an auto back up software can make backups of data on a storage device through an encryption function (e.g., AES) function. For example, the un-encrypted data at a storage location of the storage device can be temporarily migrated to a second storage location to be encrypted and then migrated back to the original storage location. In one embodiment, the second storage location is a different storage location on the same storage device. In one embodiment, the second storage location is a different storage device.

In one embodiment, the original (e.g., non-encrypted) data can be removed with multiple random overwrites to erase the unencrypted data such that data on the storage device is encrypted.

**FIGURE 5** illustrates a screen shot 500 showing an interface to create a password or to change the password, according to one embodiment.

The screenshot 500 shows a security access screen to be used for password maintenance. In one embodiment, the security access screen includes a checkbox 'Disable Password Security' to disable password authentication prior to access of a storage device to logon to the operating system or to access data on the storage device. For example, if the 'Disable Password Security' box is selected, the password fields and the hint field do not need to be filled in prior to logon or prior to setting up the host system. In this case, data stored on the storage device may not be encrypted. Or, data stored on the storage device may be encrypted but the encryption key is available for decryption without a password having to be supplied prior to data access.

In one embodiment, a new password is set up to secure the storage device by entering a desired password in the 'New Password' and 'Confirm New Password' fields. The 'Current Password' field may be left blank in this case. In one embodiment, an existing password is changed via supplying the correct password in the 'Current Password' field and entering the desired password in the 'New Password' and 'Confirm New Password' fields.

The 'Hint' field can be used to enter a question to which only the user knows the answer to. The question may be asked when the user forgets the password, for example, when an incorrect password is entered after a predetermined number of times. The `Hint' field can also be used to enter a password hint, such as 'the password is related to Aunt Dolly's birthday' to remind the user of the password. In one embodiment, the user may indicate that he or she has forgotten the password and request to see the password hint prior to submitting incorrect passwords for the predetermined number of times.

**FIGURE 6** illustrates a screenshot 600 showing an interface to secure a storage device, according to one embodiment.

The screenshot 600 illustrates an example of securing a storage device through data encryption of data on the storage device. In one embodiment, a source drive (e.g., the storage to be secured via data encryption) is selected from the list of storage devices listed under sub-window 602 and a destination drive is selected from the list of storage devices listed under sub-window 604. For example, the source drive is the storage device having data to be secured. The data on the source drive can be encrypted and then migrated to the destination drive to be stored. In one embodiment, the data on the source drive can be migrated to the destination drive to be encrypted and erased from the source drive. Then the encrypted data can be migrated back to the source drive to be stored.

In one embodiment, one storage device (e.g., the source drive) is involved in the process. For example, the data to be encrypted on the source drive is migrated to another storage location to be encrypted. The un-secured data is erased on the original storage location and the encrypted data stored on the other storage location can be migrated back to the original storage location to be stored, according to one embodiment.

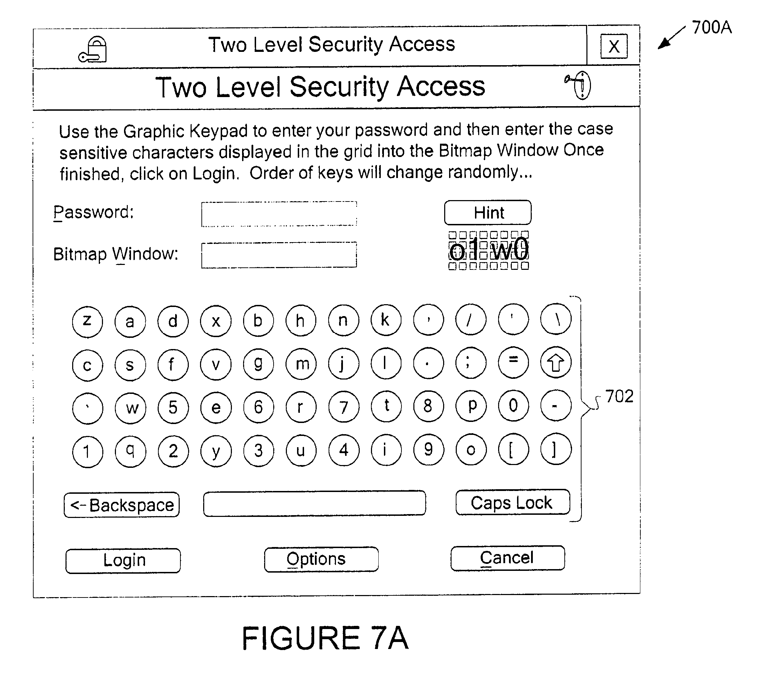

**FIGURE 7A** illustrates a screenshot 700A showing an interface showing a login screen to access a secured storage device, according to one embodiment

The screenshot 700A shows an example of a two level security access for authentication to access data on a storage device. In one embodiment, the predetermined password is to be entered in the 'Password' field before access to the storage device can be granted. In one embodiment, the text shown in the bitmap window is to be entered in addition to the correct password in the 'Bitmap Window' field before access to the storage device is granted. Once the 'Password' field has been filled in, the 'Login' icon can be clicked to verify access and upon successful verification, grant access.

**FIGURE 7B** illustrates a screenshot 700B showing an interface showing a login screen having a password prompt, according to one embodiment.

The predetermined password is to be entered in the field 'Please Enter Password' to access the system (e.g., to log on to the one or more operating systems and/or to access one or more storage devices), according to one embodiment.

**FIGURE 7C** illustrates a screenshot 800C of a unsuccessful logon due to an invalid password entered in **FIGURE 7B**, according to one embodiment.

Upon the unsuccessful logon, the user has the option to quit or to try again, according to one embodiment. There may be a predetermined number of times the user can submit invalid passwords. When the predetermined number of times has been reached, the system may quit or offer the user a password hint as shown in the embodiment of **FIGURE 8**.

The screenshot 800 shows an example of a prompt to show a password hint to the user. The password hint prompt can be requested by the user if the user has forgotten the password. In one embodiment, the password hint prompt is triggered when a predetermined number of times of incorrect password submissions have occurred. For example, if a user submits three instances of incorrect passwords, the system can supply the password hint specified during password setup.

**FIGURE 9** is a schematic view of a interceptor module 104 having a processing unit 902, a controller, a memory module, a software module, and/or a wireless module, according to one embodiment.

The processing unit 902 may include various software instances such as the encryption module, and/or the operating system. One embodiment of the encryption module includes code to execute one or many encryption algorithms to secure and decipher data stored on a storage device. In one embodiment, different encryption algorithms can be used for different storage devices and the controller and/or memory is able to associate the relevant encryption algorithm with the storage device that was encrypted with the encryption algorithm. In one embodiment, the encryption module comprises memory to store one or more encryption keys used with the one or more encryption algorithms to secure one or more storage devices. Alternatively, the encryption key is supplied by an alternative device to the interceptor module 104 during encryption/decryption processes of the interceptor module 104. For example, the one or more encryption keys can be sent to the interceptor module 104 upon authorization. The authorization can take one of many forms for example, a password authorization identifying a user identity of the host system, according to one embodiment.

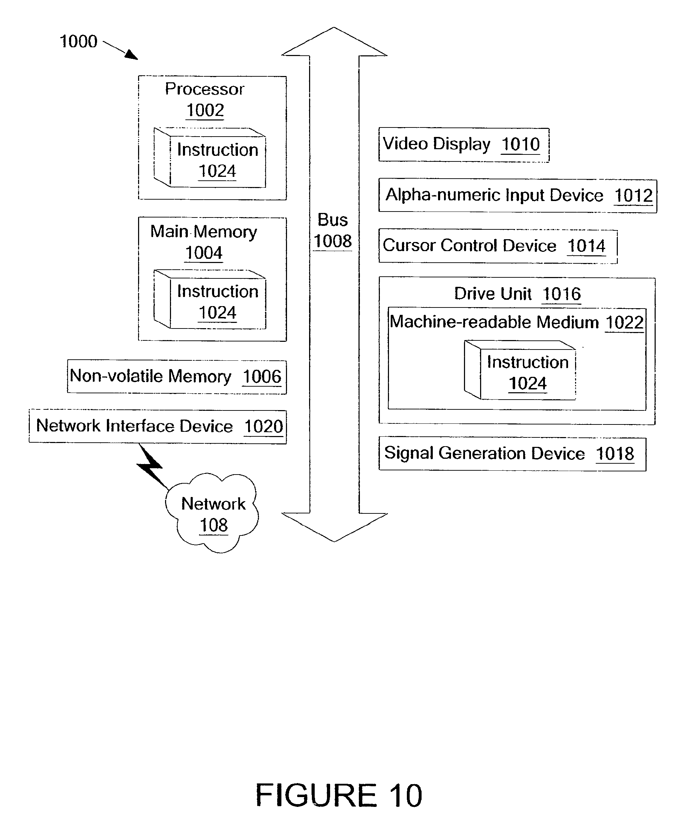

**FIGURE 10** shows a diagrammatic representation of a machine in the exemplary form of a computer system 1000 within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in a client-server network environment, or as a peer machine in a peer-to-peer (or distributed) network environment. The machine may be a server computer, a client computer, a personal computer (PC), a tablet PC, a set-top box (STB), a personal digital assistant (PDA), a cellular telephone, a web appliance, a network router, switch or bridge, or any machine capable of executing a set of instructions (sequential or otherwise) that specify actions to be taken by that machine. Furthermore, while only a single machine is illustrated, the term "machine" shall also be taken to include any collection of machines that individually or jointly execute a set (or multiple sets) of instructions to perform any one or more of the methodologies discussed herein.

While the machine-readable medium 1022 is shown in an exemplary embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. In general, the routines executed to implement the embodiments of the disclosure, may be implemented as part of an operating system or a specific application, component, program, object, module or sequence of instructions referred to as "computer programs." The computer programs typically comprise one or more instructions set at various times in various memory and storage devices in a computer, and that, when read and executed by one or more processors in a computer, cause the computer to perform operations to execute elements involving the various aspects of the disclosure.

Moreover, while embodiments have been described in the context of fully functioning computers and computer systems, those skilled in the art will appreciate that the various embodiments are capable of being distributed as a program product in a variety of forms, and that the disclosure applies equally regardless of the particular type of machine or computer-readable media used to actually effect the distribution. Examples of computer-readable media include but are not limited to recordable type media such as volatile and non-volatile memory devices, floppy and other removable disks, hard disk drives, optical disks (e.g., Compact Disk Read-Only Memory (CD ROMS), Digital Versatile Disks, (DVDs), etc.), among others, and transmission type media such as digital and analog communication links.

Although embodiments have been described with reference to specific exemplary embodiments, it will be evident that the various modification and changes can be made to these embodiments. Accordingly, the specification and drawings are to be regarded in an illustrative sense rather than in a restrictive sense. The foregoing specification provides a description with reference to specific exemplary embodiments. It will be evident that various modifications may be made thereto without departing from the broader spirit and scope as set forth in the following claims. The specification and drawings are, accordingly, to be regarded in an illustrative sense rather than a restrictive sense.

## Claims

1. A method comprising:
receiving a request to access data stored on a storage device, wherein the data stored on the storage device has been encrypted using at least one encryption key;
in response to receiving the request, prompting a user to provide a password;
in response to receiving at least a representation of a password that matches a predetermined password, accessing the encryption key to decipher the requested data stored on the storage device.

2. The method of claim 1, wherein the storage device is a disk drive.

3. The method of claim 1, wherein the storage device is a storage device peripheral to a system.

4. The method of claim 3, wherein the method is performed by an interceptor coupled between the storage device and the system, wherein the interceptor comprises at least one of a controller and memory.

5. The method of claim 4, wherein the encryption key is accessed from one of the interceptor, the system, and the storage device.

6. The method of claim 5, comprising retrieving the encryption key from a hidden location of the storage device.

7. The method of any preceding claim comprising initiating the said request in response to at least one of a power-up, completion of a time-out, and a restart of the system.

8. The method of any preceding claim, wherein accessing the encryption key comprises accessing a second encryption key to decipher the encryption key.

9. The method of any preceding claim comprising deciphering the requested data using the encryption key.

10. The method of claim 9, comprising migrating the decrypted data from a first storage location on the storage device to at least a second storage location, and re-encrypting the data with the encryption key.

11. The method of claim 10, further comprising migrating the encrypted data back to the first storage location.

12. The method of any preceding claim, further comprising, in response to receiving at least the representation of the password that does not match the predetermined password, sending a network address associated with the system to a pre-identified recipient to identify a location of the storage device.

13. The method of claim 12, wherein the predetermined recipient is a pre-identified web site.

14. A machine-readable medium having stored thereon a set of instructions which when executed perform a method comprising:
receiving a request to access data stored on a storage device, wherein the data stored on the storage device has been encrypted using at least one encryption key;
in response to receiving the request, prompting a user to provide a password;
in response to receiving at least a representation of a password that matches a predetermined password, accessing the encryption key to decipher the requested data stored on the storage device.

15. The machine-readable medium of claim 14, wherein the storage device is a storage device peripheral to a system.

16. The machine-readable medium of claim 15, wherein the method is performed by an interceptor coupled between the storage device and the system, wherein the interceptor comprises at least one of a controller and memory.

17. The machine-readable medium of claim 16, wherein the encryption key is accessed from one of the interceptor, the system, and the storage device.

18. The machine-readable medium of claim 17, wherein the encryption key is to be stored on hidden tracks when accessed from the storage device.

19. The machine-readable medium of claim 17, wherein the receiving the request comprises receiving a first request of a session, wherein the session is initiated in response to at least one of a power-up, completion of a time-out, and a restart of the system.

20. The machine-readable medium of claim 14, wherein in further response to receiving at least the representation of a password that matches the predetermined password, migrating data from a first storage location on the storage device to at least a second storage location, and encrypting the data with the encryption key.

21. A computer program which, when run on a suitable system, implements the method of any one of claims 1 to 13.

22. A system comprising:
a means for receiving a request to access data stored on a storage device, wherein the data stored on the storage device has been encrypted using at least one encryption key;
a means for prompting a user to provide a password, in response to receiving the request; and
a means for accessing the encryption key to decipher the requested data stored on the storage device, in response to receiving at least a representation of a password that matches a predetermined password.

23. An interceptor device for coupling between a host system and a data storage device for the system, wherein data is stored on the storage device has been encrypted using at least one encryption key,
the interceptor device comprising at least a processor and a memory, and the interceptor device being operable to:
receive from the host system a request to access data stored on the storage device:, prompt a user for a password in response to the request; and
in response to receiving at least a representation of a password which matches a predetermined password, access an encryption key to decrypt the requested data.

24. A device according to claim 23, wherein the device is operable to access the encryption key from one of the device, the host system and the storage device.

25. A device according to claim 24, wherein the device is operable to access the encryption key from a hidden location of the storage device.

26. A device according to claim 23, 24 or 25, operable to decrypt an encrypted version of the encryption key to access the encryption key.

27. A device according to claim 26, operable to decrypt of the requested data using the accessed encryption key.

28. A device according to claim 27, wherein the device is operable to supply the decrypted data to the host system.

29. A method comprising:
receiving a request to access a storage device;
in response to receiving the request, prompting a user to provide a password;
in response to the provision of the password, creating an encryption key and associating the encryption key with the password;
encrypting data with the encryption key; and
storing the encrypted data on the storage device.

30. A method according to claim 29, comprising creating a masked version of the password.

31. A method according to claim 30, comprising storing the masked version of the password at a predetermined location of the storage device.

32. A method according to claim 29, 30 or 31, comprising generating with the encryption key from the password.

33. A method according to claim 29, 30 or 31 comprising creating a masked version of the encryption key.

34. A method according to claim 29, 30, 31, 32 or 33 comprising storing the encryption key or the masked version of the encryption key.

35. A method according to claim 29 comprising selecting data to be encrypted, the data being at a source location, migrating the data to a destination location, and encrypting the data at the destination location using the said encryption key.

36. A system comprising:
means for receiving a request to access a storage device;
means responsive to receiving the request for prompting a user to provide a password, means responsive to the provision of the password for creating an encryption key and associating the encryption key with the password;
means for encrypting the data with the encryption key; and
means of storing the encrypted data on the storage device.

37. A computer program which when run on a suitable system implements the method of any one of claims 29 to 35.

38. A carrier carrying the computer program of claim 37.

39. A carrier according to claim 38, which is a machine-readable medium.
